# EUROPEAN PATENT SPECIFICATION

(11) **EP 0 401 911 B1**
(45) Date of publication and mention of the grant of the patent: **14.09.1994**
(21) Application number: 90201400.0
(22) Date of filing: 01.06.1990
(51) Int. Cl.: H05B 39/04, H05B 39/09

(54) **Switching device**
Schaltungsanordnung
Dispositif de commutation

(30) Priority: 07.06.1989 NL 8901443
(43) Date of publication of application: 12.12.1990
(73) Proprietor: Philips Electronics N.V., 5621 BA Eindhoven (NL)
(72) Inventor: Luursema, Meerten, NL-5656 AA Eindhoven (NL)
(74) Representative: Evers, Johannes Hubertus Maria

(56) References cited:
- EP-A- 0 005 311
- DE-A- 3 308 959
- DE-A- 3 609 731
- FR-A- 2 362 553
- US-A- 4 230 970

## Description

The invention relates to a switching device suitable for operating a lamp by means of a pulse-shaped voltage V1, comprising
- switching means for generating the pulse-shaped voltage V1 from an input voltage, V1 having an amplitude proportional to the input voltage,
- a pulse width modulator for supplying control pulses to the switching means,
- a first auxiliary circuit for generating a first signal from the pulse-shaped voltage V1, the magnitude of this first signal being proportional to an average value of the pulse-shaped voltage V1, and
- a control device for making the first signal substantially equal to a second signal through the supply of a control signal to the pulse width modulator.
- a second auxiliary circuit for generating the second signal, the magnitude of which is inversely proportional to the input voltage.

Such a switching device is proposed in DE-OS 3.609 731. In the switching device proposed, the pulse width modulator compares a sawtooth signal, of which the amplitude is a reciprocal function of the input voltage with a signal that is proportional to the voltage at the output clamps. The voltage at the output clamps is to a proportional average value of a pulse-shaped voltage that the switching means generate from the input voltage, the proportionality factor depending on the duty-cycle of the pulse-shaped voltage. The aim of the known switching device is to achieve a voltage at the output clamps that is relatively constant, even in case of fluctuations of the input voltage.

The luminous flux of an incandescent lamp depends on the effective value of the voltage with which the lamp is supplied. If the lamp is supplied, for example, from a DC-voltage source, like a single cell of a battery, the voltage of which decreases in proportion as the source has been longer in use, the luminous flux of the lamp will decrease accordingly.

If, however, a switching device as described in the opening paragraph, supplied with an input voltage E, is used for generating a pulse-shaped voltage V1, the amplitude of which is proportional to E, and which has a duty cycle D, it is possible to have D increase to such an extent, when E decreases, that the effective value of V1 remains substantially constant. The limit of the control range of the switching device is not reached until the moment D has increased to 100%.

If an incandescent lamp is supplied by means of such a pulse-shaped voltage, the effective value of which is substantially constant, the luminous flux supplied by the lamp will also be substantially constant. In the switching circuit as disclosed however, the reciprocal function is approximated by a linear function. This has the disadvantage that the voltage at the output clamps and therewith the effective value of the pulse-shaped voltage may still show relatively high deviations from the desired value when variations in the input voltage occur. The invention has for its object to indicate how the second auxiliary circuit of the switching device can be so realised that the second signal is inversely proportional to the input voltage and therewith that the effective value of the pulse-shaped voltage generated by the switching device remains substantially constant, also with wide variations of the input voltage.

This object is achieved in that in a switching device of the type mentioned in the opening paragraph the second signal is derived by having the second auxiliary circuit for generating the second signal comprise
- a switching device A for generating a pulse-shaped voltage V2 from the input voltage with a duty cycle δ, an amplitude proportional to the input voltage, and a substantially constant average value, and
- a switching device B for generating a signal which is proportional to the duty cycle δ from the pulse-shaped voltage V2.

The duty cycle δ of the pulse-shaped voltage V2 is inversely proportional to E owing to the fact that the average value of this voltage is substantially constant. The signal generated by the switching device B, proportional to δ, is thus suitable to serve as the second signal.

It is noted that from USP 4.156.166 a switching device suitable for operating a lamp is known in which the first signal is compared to a second signal and in which the difference between these signals is amplified to yield the control signal supplied to the pulse width modulator. In this switching device the second signal is independent of the supply voltage and the condition of the lamp.

In a preferred embodiment of the invention the switching device B comprises
- a switching device C for generating a pulse-shaped voltage V3 from the pulse-shaped voltage V2 with a duty cycle δ and a constant amplitude, and
- a switching device F for generating a signal which is proportional to an average value of the pulse-shaped voltage V3.

Since the pulse-shaped voltage V3 has a constant amplitude and a duty cycle δ, the average value of V3 is proportional to δ. Thus this embodiment of switching device B constitutes a relatively simple and reliable device for obtaining the second signal.

An advantageous embodiment of the switching device C comprises mainly a circuit of a buffer amplifier, a resistor, and a zener diode. The constant amplitude of the pulse-shaped voltage V3 is thus realised in a very simple manner by means of the zener voltage of the zener diode.

It is furthermore advantageous if the first auxiliary circuit for generating the first signal comprises an integrating network. It is similarly advantageous if the switching device F for generating a signal proportional to an average value of the pulse-shaped voltage V3 comprises an integrating network. In both cases an integrating network provides a simple manner for generating from a pulse-shaped voltage a signal which is proportional to the average value of the pulse-shaped voltage.

The invention will be described in more detail with reference to a drawing of an embodiment. In the drawing
Fig. 1 is a diagrammatic representation of the arrangement of an embodiment of a switching device according to the invention and a lamp supplied by the switching device;
Fig. 2 shows the embodiment of Fig. 1 in more detail;
Fig. 3 shows a preferred embodiment of an integrating network, which forms part of the switching device according to Fig. 2.

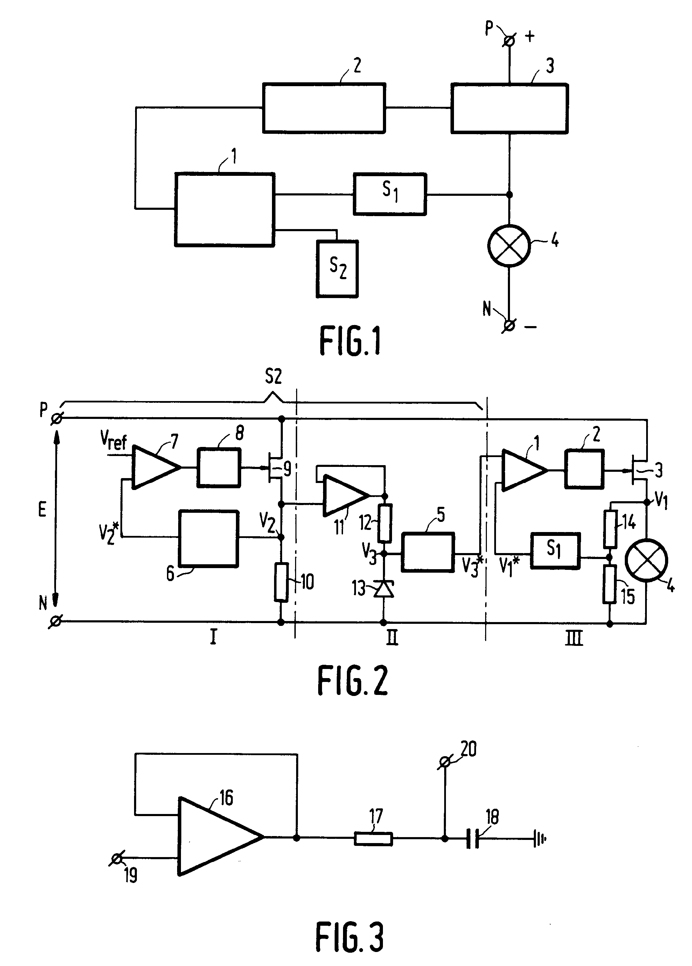

in Fig. 1, P and N are connection terminals suitable for being connected to a positive and a negative pole, respectively, of a DC-voltage source. S1 and S2 are a first and a second auxiliary circuit for generating a first and a second signal, respectively.
One output of each of these auxiliary circuits is connected to an input of a control device 1. An output of the control device 1 is connected to an input of a pulse width modulator 2. An output of the pulse width modulator 2 is connected to a control electrode of switching means 3. When the switching means 3 are conducting, there is a conducting connection between terminal P and terminal N via lamp 4. When the switching means 3 are non-conducting, this connection is broken. A junction between the switching means 3 and the lamp 4 is connected to an input of the auxiliary circuit S1.

Fig. 2 has been subdivided into sections I, II, and III. Circuits elements corresponding to circuit elements in Fig. 1 have the same reference numerals. Sections I and II together form the second auxiliary circuit S2. The connection terminals are shunted by a series circuit of a semiconductor switching element 9 and a resistor 10. An input of an integrating network 6 is connected to a junction between the semiconductor switching element 9 and the resistor 10. An output of the integrating network 6 is connected to an input of a power amplifier 7. Another input of this power amplifier is connected to a reference potential Vref. An output of power amplifier 7 is connected to an input of a pulse width modulator 8, an output of which is connected to a control electrode of the semiconductor switching element 9.

Section II forms the switching device B. In section II of the switching device there is a shunt across resistor 10 consisting of a series circuit of a buffer amplifier 11, a resistor 12, and a zener diode 13, so that one input of the buffer amplifier 11 is connected to a junction between semiconductor switching element 9 and resistor 10, and an anode of the zener diode is connected to N. The series circuit of the buffer amplifier 11, the resistor 12, and the zener diode 13 forms the switching device C. An input of an integrating network 5 is connected to a junction between the zener diode 13 and the resistor 12. An output of the integrating network 5 is connected to an input of the control device 1, which takes the form of a power amplifier. Integrating network 5 forms the switching device F.

In section III of the switching device, the connection terminals P and N are shunted by a series circuit of switching means 3, in the form of a semiconductor switching element, and lamp 4, in such a way that a main electrode of the semiconductor switching element is connected to P. The lamp 4 is shunted by a series circuit of two resistors 14 and 15. An input of the first auxiliary circuit S1, which forms an integrating network, is connected to a junction between resistor 14 and resistor 15. An output of the first auxiliary circuit S1 is connected to an input of the power amplifier 1. An output of power amplifier 1 is connected to an input of the pulse width modulator 2. An output of the pulse width modulator 2 is connected to a gate electrode of the semiconductor switching element 3.

An integrating network in Fig. 3 is arranged as a circuit of a buffer amplifier 16, a resistor 17, and a capacitor 18. Terminal 19 is an input terminal and terminal 20 is an output terminal of the network. Integrating networks 5 and 6 and the first auxiliary circuit S1 have been arranged in the configuration shown in Fig. 3.

The switching device described operates as follows.

If a DC-voltage source with voltage E is connected to terminals P and N, the semiconductor switching element 9 in section I of the switching device is alternately conducting and non-conducting with a duty cycle δ. The result is that a pulse-shaped voltage V2 is present across resistor 10, with an amplitude substantially equal to E and a duty cycle δ. A DC-voltage V2* at the output of the integrating network 6 is proportional to the average value of V2, which is δ.E. The reference potential Vref is constant. The combination of the power amplifier 7 and the pulse width modulator 8 controls the duty cycle δ of the semiconductor switching element 9 in such a way that the DC-voltage V2* is kept substantially constant, so that δ is inversely proportional to E.

In section II of the switching device, a pulse-shaped voltage V3 is present, derived from the pulse-shaped voltage V2 by means of the circuit elements 11, 12, and 13, with a duty cycle δ and an amplitude which is independent of the input voltage E and equal to the zener voltage of the zener diode 13. At the output of the integrating network 5 there is a DC-voltage V3*, which is proportional to the average value of V3. Since the amplitude of V3 is constant, V3* is proportional to δ, so that V3* can act as the second signal.

In section III of the switching device, the semiconductor switching element 3 is alternately conducting and non-conducting with a duty cycle D. Thus a pulse-shaped voltage V1 with a duty cycle D and an amplitude E is present across the lamp 4. A DC-voltage V1* is derived from V1 by means of the circuit elements 14, 15, and S1. This DC-voltage, present at the output of S1, is proportional to the average value of V1, which is D.E, and forms the first signal. The combination of the power amplifier 1 and the pulse width modulator 2 determines the duty cycle D in such a way that the DC-voltage V1* is kept substantially equal to V3*, which ensures that D.E is substantially proportional to δ in section III of the switching device.

Since δ is inversely proportional to E, it is now true that D.E^2 is substantially constant, so that the effective value of the voltage across the lamp (D^($\frac{\text{1}}{\text{2}}$).E) is also constant. The Table below gives the relationship between the input voltage E of a supply voltage source and the effective value of the pulse-shaped voltage V1, Vlamp (eff), as it was measured in a practical version of the embodiment considered. The lamp used was a halogen incandescent lamp (12 V, 55 W).

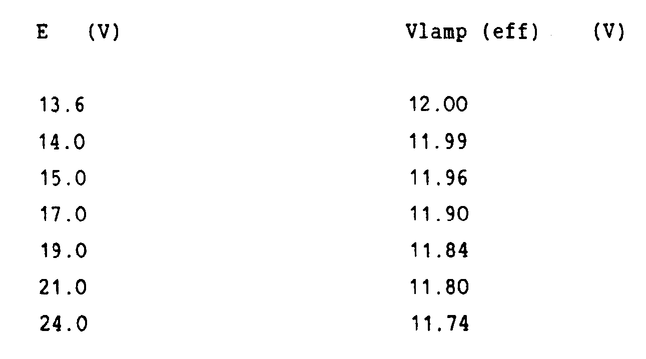

## Claims

1. A switching device suitable for operating a lamp (4) by means of a pulse-shaped voltage V1, comprising
- switching means (3) for generating the pulse-shaped voltage V1 from an input voltage (E), V1 having an amplitude proportional to the input voltage (E),
- a pulse width modulator (2) for supplying control pulses to the switching means (3),
- a first auxiliary circuit (S₁), for generating a first signal (V1*) from the pulse-shaped voltage V1, the magnitude of this first signal being proportional to an average value of the pulse-shaped voltage V1, and
- a control device (1) for making the first signal (V1*) substantially equal to a second signal (V3*) through the supply of a control signal to the pulse width modulator (2),
- a second auxiliary circuit (S2) for generating the second signal (V3*), the magnitude of which is inversely proportional to the input voltage (E),
characterized in that the second auxiliary circuit (S2) for generating the second signal (V3*) comprises
- a switching device A (I) for generating a pulse-shaped voltage V2 from the input voltage (E) with a duty cycle δ, an amplitude proportional to the input voltage (E), and a substantially constant average value, and
- a switching device B (II) for generating a signal with a magnitude proportional to the duty cycle δ from the pulse-shaped voltage V2.

2. A switching device as claimed in Claim 1, characterized in that switching device B (II) comprises
- a switching device C (11,12,13) for generating a pulse-shaped voltage V3 from the pulse-shaped voltage V2 with a duty cycle δ and a constant amplitude, and
- a switching device F (5) for generating a signal which is proportional to an average value of the pulse-shaped voltage V3.

3. A switching device as claimed in Claim 2, characterized in that the switching device C mainly comprises a circuit of a power amplifier (11), a resistor (12), and a zener diode (13).

4. A switching device as claimed in Claim 1, 2, or 3 characterized in that the first auxiliary circuit (S1) for generating the first signal (V1*) comprises an integrating network (16....20).

5. A switching device as claimed in Claim 2, characterized in that the switching device F (5) for generating a signal (V3*) proportional to an average value of the pulse-shaped voltage V3 comprises an integrating network (16...20).

## Patentansprüche

1. Geeignete Schaltungsanordnung zum Betreiben einer Lampe (4) mit einer impulsförmigen Spannung V1, mit
- Schaltmitteln (3) zum Erzeugen der impulsförmigen Spannung V1 aus einer Eingangsspannung (E), wobei V1 eine Amplitude proportional der Eingangsspannung (E) hat,
- einem Impulsbreitenmodulator (2) zum Liefern von Steuerimpulsen an die Schaltmittel (3),
- einer ersten Hilfsschaltung (S₁) zum Erzeugen eines ersten Signals (V1*) aus der impulsförmigen Spannung V1, wobei die Größe dieses ersten Signals einem Mittelwert der impulsförmigen Spannung V1 proportional ist, und
- einer Steuereinrichtung (1) im wesentlichen zum Angleichen des ersten Signals (V1*) an ein zweites Signal (V3*) durch die Zufuhr eines Steuersignals an den Impulsbreitenmodulator (2),
- einer zweiten Hilfsschaltung (S2) zum Erzeugen des zweiten Signals (V3*), dessen Größe umgekehrt proportional der Eingangsspannung (E) ist,
dadurch gekennzeichnet, daß die zweite Hilfsschaltung (S2) zum Erzeugen des zweiten Signals (V3*) folgende Elemente enthält:
- eine Schaltungsanordnung A (I) zum Erzeugen einer impulsförmigen Spannung V2 aus der Eingangsspannung (E) mit einem Tastverhältnis δ, mit einer Amplitude proportional der Eingangsspannung (E) und mit einem im wesentlichen konstanten Mittelwert, und
- einer Schaltungsanordnung B (II) zum Erzeugen eines Signals, das dem Tastverhältnis δ aus der impulsförmigen Spannung V2 proportional ist.

2. Schaltungsanordnung nach Anspruch 1, dadurch gekennzeichnet, daß die Schaltungsanordnung B (II) folgende Elemente enthält:
- eine Schaltungsanordnung C (11, 12, 13) zum Erzeugen einer impulsförmigen Spannung V3 aus der impulsförmigen Spannung V2 mit einem Tastverhältnis δ und einer konstanten Amplitude, und
- eine Schaltungsanordnung F (5) zum Erzeugen eines Signals, das einem Mittelwert der impulsförmigen Spannung V3 proportional ist.

3. Schaltungsanordnung nach Anspruch 2, dadurch gekennzeichnet, daß die Schaltungsanordnung C (II) hauptsächlich einen Kreis aus einem Leistungsverstärker (11), einem Widerstand (12) und einer Zenerdiode (13) enthält.

4. Schaltungsanordnung nach Anspruch 1, 2, 3, dadurch gekennzeichnet, daß die erste Hilfsschaltung (S1) zum Erzeugen des ersten Signals (V1*) ein integrierendes Netzwerk (16...20) enthält.

5. Schaltungsanordnung nach Anspruch 2, dadurch gekennzeichnet, daß die Schaltungsanordnung F (5) zum Erzeugen eines Signals (V3*) proportional einem Mittelwert der impulsförmigen Spannung V3 ein integrierendes Netzwerk (16...20) enthält.

## Revendications

1. Dispositif de commutation qui convient à faire fonctionner une lampe (4) à l'aide d'une tension impulsionnelle V1, comportant
- des moyens de commutation (3) pour engendrer à partir d'une tension d'entrée (E) une tension impulsionnelle V1 présentant une amplitude proportionnelle à la tension d'entrée (E),
- un modulateur de durée d'impulsion (2) pour fournir des impulsions de commande aux moyens de commutation (3),
- un premier circuit auxiliaire (S1) pour engendrer à partir de la tension impulsionnelle V1 un premier signal (V1*) dont la valeur est proportionnelle à la valeur moyenne de la tension impulsionnelle V1, et
- un dispositif de réglage (1) pour rendre le premier signal (V1*) sensiblement égal à un deuxième signal (V3*) en fournissant un signal de commande au modulateur de durée d'impulsion (2),
- un deuxième circuit auxiliaire (S2) pour engendrer le deuxième signal (V3*) dont la valeur est inversement proportionnelle à la tension d'entrée (E),
caractérisé en ce que le deuxième circuit auxiliaire (S2) pour engendrer le deuxième signal (V3*) comporte
- un dispositif de commutation A (I) pour engendrer à partir de la tension d'entrée (E) une tension impulsionnelle V2 présentant un rapport cyclique δ, une amplitude proportionnelle à la tension d'entrée (E), et une valeur moyenne sensiblement constante, et
- un dispositif de commutation B (II) pour engendrer à partir de la tension impulsionnelle V2 un signal qui est proportionnel au rapport cyclique δ.

2. Dispositif de commutation selon la revendication 1, caractérisé en ce que le dispositif de commutation B (II) comporte
- un dispositif de commutation C (11, 12, 13) pour engendrer à partir de la tension impulsionnelle V2 une tension impulsionnelle V3 présentant un rapport cyclique δ et une amplitude constante, et
- un dispositif de commutation F (5) pour engendrer un signal qui est proportionnel à une valeur moyenne de la tension impulsionnelle V3.

3. Dispositif de commutation selon la revendication 2, caractérisé en ce que le dispositif de commutation C comporte principalement un circuit constitué d'un amplificateur de puissance (11), d'une résistance (12) et d'une diode Zener (13).

4. Dispositif de commutation selon la revendication 1, 2 ou 3, caractérisé en ce que le premier circuit auxiliaire (S1) pour engendrer le premier signal (V1*) comporte un réseau intégrateur (16...20).

5. Dispositif de commutation selon la revendication 2, caractérisé en ce que le dispositif de commutation F (5) pour engendrer un signal (V3*) proportionnel à une valeur moyenne de la tension impulsionnelle V3 comporte un réseau intégrateur (16...20).
